# EUROPÄISCHE PATENTANMELDUNG

(11) **EP 1 731 452 A2**
(43) Veröffentlichungstag der Anmeldung: **13.12.2006**
(21) Anmeldenummer: 06008077.7
(22) Anmeldetag: 19.04.2006
(51) Int. Cl.: B65G 47/90

(54) **Lastaufnahmemittel für Stückgüter**

(30) Priorität: 19.04.2005 DE 102005018207
(71) Anmelder: Helmut- Schmidt- Universität Universität der Bundeswehr Hamburg, 22043 Hamburg (DE)
(72) Erfinder: Bruns, Rainer, Prof. Dr.-Ing., 22395 Hamburg (DE)
(74) Vertreter: Hausfeld, Norbert

(57) **Zusammenfassung**

Die Erfindung betrifft eine Vorrichtung zum Aufnehmen einzelner Stückgüter, bestehend aus einem Außenteil, einem daran befestigten Schlauch (1) und einem an dem Schlauch (1) befestigten Innenteil (3), das relativ zum Außenteil (2) beweglich ist, wobei der Schlauch (1) doppelwandig ausgebildet ist und dadurch eine ringförmige Kammer (20) umgibt, die mit einem fließfähigen Material (22) gefüllt ist, und wobei der Schlauch beim Absenken der Vorrichtung das Stückgut zumindest teilweise umschließend ausgebildet ist, und wobei Außenteil (2) und Innenteil (3) derart am Schlauch (1) befestigt sind, daß eine Bewegung des Innenteils (3) relativ zum Außenteil (2) zu einer Einwärtsbewegung des am Stückgut anliegenden Endes des Schlauches (1) führt.

## Beschreibung

Die Erfindung betrifft eine Vorrichtung zum bevorzugt maschinellen bzw. automatischen Aufnehmen einzelner Stückgüter. Der Fachbegriff aus der Materialflusstechnik hierfür ist Lastaufnahmemittel. Stückgüter sind einzelne Gegenstände oder Objekte die einzeln bewegt werden.

In Materialflusssystemen werden Stückgüter bei den verschiedenen logistischen Funktionen, wie dem Transportieren, dem Umschlagen, dem Handhaben, dem Positionieren, dem Palettieren oder dem Kommissionieren bewegt, d.h. sie verändern ihren Ort und oder ihre räumliche Position. Bei einer maschinellen beziehungsweise automatischen Ausführung dieser Bewegung müssen die Stückgüter zunächst von der Maschine (Kran, Regalbediengerät, Flurförderzeug, Roboter, Handhabungsgerät, Positioniergerät, Hebezeug, Sortieranlage), die die Bewegung durchführt, aufgenommen (gegriffen, gehalten) werden. Dieses gilt unabhängig davon, ob das Stückgut nur eine einfache geradlinige Bewegung oder eine komplizierte räumliche Bewegung ausführen soll.

Durch das Lastaufnahmemittel müssen Kräfte von der Maschine auf das Stückgut übertragen werden können, damit eine Bewegung durchgeführt werden kann. Denn zur Erzeugung und Aufrechterhaltung einer Bewegung sind verschiedene Widerstandskräfte, wie Reibungskräfte, die Schwerkraft und Massenträgheitskräfte zu überwinden. Die Kräfte können vom Lastaufnahmemittel auf das Stückgut z.B. über dessen Oberfläche durch Normal- und/oder Reibungskräfte sowie über im Inneren des Stückgutes angreifende Massenkräfte (Magnetkräfte, elektrostatische Kräfte) übertragen werden.

Bekannt sind daher viele unterschiedliche Lastaufnahmemittel, die auf den verschiedenen Wirkprinzipien der Kraftübertragung beruhen. Wichtige Ausführungsformen von Lastaufnahmemittel sind: Gabelzinken, Seile und Gurte, Vakuumheber, Greifarme, Greifklauen, Lasthebemagnete, Zangen, Klemmen.

Lastaufnahmemittel nach dem Stand der Technik besitzen den Nachteil, dass sie nur für normierte Ladungseinheiten (Ladungsträger wie die Palette, den Container oder genormte Kisten) oder nur für spezielle Stückgüter verwendbar sind. Als Beispiele seien hier genannt: Lasthebemagnet nur für Stückgüter aus Eisen oder Stahl, Vakuumheber nur für Stückgüter mit glatter und ebener Oberfläche, Gabelzinken nur für Paletten oder Container.

Außerdem müssen viele Lastaufnahmemittel zur Aufnahme des Stückgutes sehr genau positioniert werden.

Aufgabe der Erfindung ist es, eine einfache Vorrichtung zum sicheren und schonenden Aufnehmen unterschiedlicher Stückgüter zu schaffen.

Diese Aufgabe wird durch das Lastaufnahmemittel gemäß den Merkmalen des Anspruchs 1 gelöst. Weitere vorteilhafte Ausgestaltungen sind Gegenstand der Unteransprüche.

Das erfindungsgemäße Lastaufnahmemittel besteht aus einem Außenteil, einem daran befestigten Schlauch und einem an dem Schlauch befestigten Innenteil, das relativ zum Außenteil beweglich ist, wodurch auch eine Bewegung des Schlauches bzw. der Schlauchoberfläche erzeugt wird. Der Schlauch ist doppelwandig ausgebildet und umgibt dadurch in seinem Inneren eine ringförmige Kammer, die wiederum mit einem fließfähigen Material gefüllt ist. Im Gebrauch wird die Vorrichtung auf das Stückgut abgesenkt, bis das eine Schlauchende das Stückgut berührt und dabei einen Teilbereich des Stückgutes umschließt. Verschiebung des Innenteils relativ zum Außenteil führt zu einer Einwärtsbewegung der Oberfläche des Schlauches, so daß das Stückgut gefasst und angehoben wird.

Die Relativbewegung zwischen Innen- und Außenteil ist bevorzugt eine axiale Bewegung, wenngleich auch andere Bewegungen denkbar sind. Es ist daher nach Anspruch 2 vorteilhaft, daß das Innenteil axial beweglich im Außenteil gelagert ist, weil dadurch eine sichere Führung der Bewegung erreicht wird.

Da die erfindungsgemäße Vorrichtung bevorzugt automatisiert betrieben werden soll, ist nach Anspruch 3 mit Vorteil vorgesehen, daß ein Antrieb vorgesehen ist, der die Relativbewegung zwischen Außen- und Innenteil bewirkt. Nach Anspruch 4 ist der Antrieb weg- oder kraftgeregelt. Die Vorrichtung kann entweder eine eigene Steuerintelligenz aufweisen oder sie wird von einer externen Steuerung angesteuert.

Die vorteilhaften Merkmale des Anspruch 5 ermöglichen eine optimale Anpassung des Schlauches an die Gestalt der aufzunehmenden Stückgüter. Wenn die Stückgüter z.B. eine sehr unebene Oberfläche aufweisen, sollte der Schlauch sehr weich sein, um sich dennoch gut anlegen zu können. Erreicht wird dies z.B. durch gezielte Änderung des Innendruckes im Schlauch, indem das darin enthaltene fließfähige Material, z.B. ein Gas oder eine flüssige Masse, gezielt zu oder abgeführt wird von einer Druckeinrichtung, z.B. einer Pumpe oder einem Kompressor. Bei anderen Füllungen, z.B. kleinen Kügelchen, könne auch andere geeignete Druckeinrichtungen verwendet werden.

Die vorteilhaften Markmale der Ansprüche 6 und 7 betreffen Verbesserungen der Anwendbarkeit und Haltbarkeit des Schlauches. Für ein besseres Festhalten des Stückgutes sind die Merkmale des Anspruch 8 mit Vorteil vorgesehen. Es können z.B. im unteren Bereich des Schlauches mehrere Greiffinger aus einem festen oder elastischen Material vorgesehen sein, oder z.B. eine Vielzahl von Noppen oder Borsten. Weitere Gestaltungsalternativen sind denkbar, z.B. kann in diesem Bereich ein Material mit besonders hohem Reibbeiwert oder mit Hafteigenschaften vorgesehen sein.

Es ist zu erwarten, dass der Schlauch beim Betrieb der erfindungsgemäßen Lastaufnahmevorrichtung einer erheblichen Beanspruchung unterliegt und somit nach einer gewissen Betriebszeit verschleißen kann und dann ausgewechselt werden muss. Es ist auch denkbar, daß je nach Stückgut unterschiedliche Schläuche verwendet werden sollen. Daher ist es vorteilhaft, den Schlauch austauschbar zu gestalten, was mit den Merkmalen des Anspruch 9 ermöglicht ist. Auch Außen- und Innenteil können z.B. bei der vorgeschlagenen lösbaren Befestigung am Schlauch einzeln ausgewechselt werden.

Die Außenseite des Schlauches könnte dazu z.B. mit einem Wulst versehen sein, der in eine ringförmige Innennut des Außenteiles hineinragt. Auf diese Weise ist die Außenseite des Schlauches formschlüssig in axialer Richtung im Außenteil fixiert. Zur Montage wird der Schlauch einfach solange in das Außenteil geschoben, bis der Wulst in die Ringnut einrastet. Bei der Demontage wird der Wulst zunächst aus der Ringnut mit einem geeigneten Werkzeug herausgedrückt. Danach kann der Schlauch in axialer Richtung herausgezogen werden. In analoger Weise ließe sich der Schlauch am Innenteil befestigen.

Die Außenseite des Schlauches könnte auch in dem Bereich, in dem Schlauch und Außenteil miteinander verbunden sein sollen, von einer Hülse umschlossen sein. Die Hülse besäße z.B. die gleiche Querschnittsform wie der Innenraum des Außenteiles. Sie würde mit dem Schlauch zum Beispiel durch verkleben fest verbunden. Die Hülse ihrerseits würde durch eine lösbare Verbindung, z.B. eine Schraubverbindung, im Außenteil fixiert, so dass die Montage und Demontage des Schlauches in einfacher Weise möglich wäre. In analoger Weise ließe sich die Innenseite des Schlauches am Innenteil befestigen. Die Hülsen selbst ließen sich kostengünstig herstellen und könnten somit beim Austausch des Schlauches mit ausgewechselt werden.

Im automatisierten Betrieb ist z.B. der Absenkvorgang der erfindungsgemäßen Vorrichtung auf das Stückgut zu steuern. Es bedarf dazu einer Größe, anhand der die Steuerung erkennt, ob der Schlauch Kontakt zum Stückgut hat. Dies ist z.B. dann erforderlich, wenn nicht mit festen Höhenkoordinaten gearbeitet werden kann, z.B. weil das Stückgut in Größe, Form, Lage variiert. Hier helfen die Merkmale der Ansprüche 10 und/oder 11, die alternativ oder gemeinsam vorgesehen sein können. Entsprechend kann das Absenken der erfindungsgemäßen Vorrichtung durch Beobachtung des Druckes im Inneren des Schlauches vorgenommen werden, der sich mit geringem technischen Aufwand messen lässt und bei Berührung mit dem Stückgut ansteigt. Diese Messmittel können auch vorteilhaft für das Einstellen des änderbaren Innendrucks verwendet werden, siehe Anspruch 5. Alternativ oder kumulativ kann z.B. auch der Abstand zwischen einem Referenzpunkt des Lastaufnahmemittels und dem Boden, auf dem das Stückgut liegt, oder zu dem Stückgut selber, gemessen und eingestellt werden.

Mit den vorteilhaften Merkmalen des Anspruch 12 wird erreicht, daß die Beweglichkeit der Schlauchoberfläche im unteren Bereich, d.h. dort wo der Schlauch beim Greifen mit dem zu ergreifenden Stückgut in Kontakt kommt, erhöht wird.

### Vorteile der Erfindung

Es können mit dem Lastaufnahmemittel außerordentlich unterschiedlich geformte Stückgüter schonend und problemlos aufgenommen werden. So lassen sich zum Beispiel mit einem einzigen Lastaufnahmemittel folgende Stückgüter aufnehmen: Tüten, Flaschen, Textilien, Schrauben, Münzen, (rohe) Eier, Emtegut, kleinere Maschinenteile, Kunststoffteile, sperrige Teile (Brillen, Kopfhörer usw.), etc. oder mit größerem Lastaufnahmemittel: Kartons, größere Maschinenteile, Stoffballen, Säcke, etc.

Es ist auch möglich, mehrere Gegenstände hintereinander aufzunehmen und erst dann wieder abzugeben. Das Lastaufnahmemittel kann daher sehr flexibel in Materialflussystemen eingesetzt werden. Dieses ist besonders dann vorteilhaft, wenn unterschiedliche Stückgüter in zeitlich kurz hintereinander liegender Abfolge bewegt werden sollen, wie dieses zum Beispiel beim Wechsel des Produktionsprogramms in der Fertigung oder bei Sortier- und Kommissionieranlagen der Fall ist.

Das Lastaufnahmemittel ist dabei sehr einfach aufgebaut und daher mit geringem technischen Aufwand und geringen Kosten herstellbar.

Der Energieverbrauch ist insbesondere im Vergleich zu anderen flexibel einsetzbaren Lastaufnahmemitteln wie dem Vakuumheber sehr gering.

Es ist keine hohe Positioniergenauigkeit zur Aufnahme der Stückgüter erforderlich.

Die Stückgüter werden sehr schonend aufgenommen, das heißt sie werden nur sehr gering mechanisch beansprucht. So kann zum Beispiel ein rohes Ei problemlos aufgenommen und bewegt werden.

Im folgenden soll die Erfindung anhand einiger Ausführungsbeispiele näher beschrieben werden, die in den Figuren prinzipienhaft und schematisch dargestellt sind. Es zeigen
Fig. 1 eine Schnittansicht eines ersten Ausführungsbeispieles der Erfindung;
Fig. 2 eine Schnittansicht eines zweiten Ausführungsbeispieles der Erfindung;
Fig. 3 eine Schnittansicht eines dritten Ausführungsbeispieles der Erfindung;
Fig. 4 eine Schnittansicht eines vierten Ausführungsbeispieles der Erfindung;
Fig. 5 eine Schnittansicht eines fünften Ausführungsbeispieles der Erfindung; und
Fig. 6 eine Schnittansicht eines sechsten Ausführungsbeispieles der Erfindung;

### Aufbau des Lastaufnahmemittels

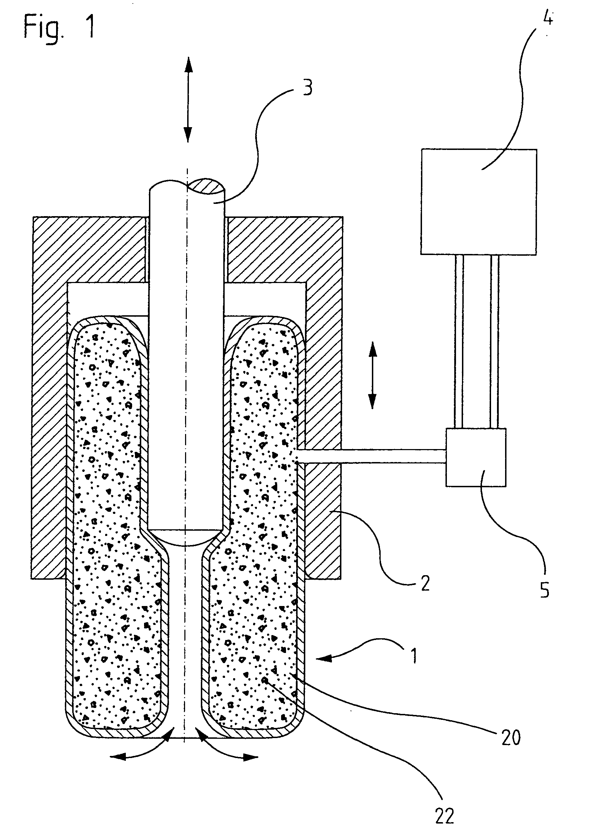

Das bestimmende Element des in Figur 1 gezeigten Lastaufnahmemittels ist ein doppelwandiger Schlauch 1. Die beiden Wände dieses Schlauches 1 bilden eine geschlossene Kammer, die mit einem fließfähigen Material, z.B. einen Flüssigkeit, einem Gas, einer Paste oder einem Granulat (viele kleine vorzugsweise kugelförmige Partikel) gefüllt ist. Zur Verbesserung der Lastaufnahme durch eine optimale Anpassung an die Gestalt der aufzunehmenden Stückgüter kann der Druck im Inneren des Schlauches 1 erhöht oder abgesenkt werden, bzw. kann der Inhalt der Kammer variiert werden durch Entnahme oder Zugabe des fließfähigen Materials. Hierzu ist z.B. eine Pumpe beziehungsweise ein Kompressor 4 vorgesehen, dessen Saug- oder Druckseite mit dem Schlauchinneren verbunden ist. Zur Einstellung des Druckes kann ein Steuerventil 5 verwendet werden. Der Schlauch selbst besteht aus einem elastischen Material, zum Beispiel aus Gummi oder einem Kunststoff-Elastomer.

Vorzugsweise ist der Schlauch mehrschichtig aufgebaut, wobei die innere Schicht z.B. zur Abdichtung dienen kann, die mittlere Schicht z.B. die erforderliche Festigkeit (z.B. Gewebe) sicherstellt und eine äußere Schicht z.B. die Übertragung großer Reibungskräfte durch einen hohen Reibbeiwert ermöglicht. Die äußere Schicht kann hierzu z.B. auch im unteren Teil mit einem Profil auf der Oberfläche oder mit Noppen versehen werden.

Die Außenwand des Schlauches ist teilweise von einem festen Außenteil 2 umschlossen. In einem Teilbereich der Kontaktfläche von Außenteil und Schlauch sind diese fest miteinander verbunden, zum Beispiel verklebt. Das Außenteil 2 dient dazu, den Schlauch zu halten und im Raum zu bewegen. Es bildet die Schnittstelle zu der Maschine, die die Bewegung des Stückgutes durchführt. Zum Beispiel kann das Außenteil am Arm eines Roboters befestigt sein. Das Außenteil ist im wesentlichen ein Rohr mit z.B. einem kreisförmigen, rechteckigen, polygonen oder ovalen Querschnitt. Das Außenteil oder das Innenteil kann aus demselben Material bestehen wie der Schlauch.

Auf einem Teil der Innenseite des Schlauches befindet sich ein festes Innenteil 3, das dazu dient, die zum Aufnehmen der Stückgüter erforderliche Bewegung der Schlauchoberfläche zu erzeugen. In einem Teilbereich der Kontaktfläche von Innenteil und Schlauch sind diese fest miteinander verbunden, zum Beispiel verklebt. Das Innenteil ist z.B. im wesentlichen eine Stange, deren Querschnittsform vorzugsweise an die des Außenteiles angepasst ist.

Das untere Ende des Außenteils sowie des Innenteils ist vorzugsweise mit geeigneten Abrundungen zu versehen, um hohe Beanspruchungen des Schlauches zu vermeiden.

Beide Teile können aus Metall, Kunststoff oder irgend einem anderen festen Material bestehen.

Das Innenteil ist axial beweglich in dem Außenteil gelagert, so dass das Innenteil relativ zum Außenteil auf und ab bewegt werden kann. In der untersten Position des Innenteils ist die Kontaktfläche zwischen dem Außenteil und dem Schlauch am kleinsten, der Schlauch ist aus dem Außenteil ausgestülpt. Folglich darf nur dieser Bereich eine feste Verbindung zwischen dem Schlauch und dem Außenteil aufweisen. In der obersten Position des Innenteils ist die Kontaktfläche zwischen dem Innenteil und dem Schlauch am kleinsten. Daher darf nur dieser Bereich eine feste Verbindung zwischen dem Schlauch und dem Innenteil aufweisen.

Um die zur Aufnahme von Stückgütern notwendige Relativbewegung zwischen Innen- und Außenteil zu erzeugen, ist ein geeigneter Antrieb vorzusehen. Ein derartiger Antrieb kann elektromagnetisch, pneumatisch, hydraulisch, mechanisch oder manuell ausgeführt sein. Für einen automatischen Betrieb kann der Antrieb weg- oder kraftgeregelt arbeiten.

Zur automatischen Aufnahme von Stückgütern muss das Lastaufnahmemittel zunächst über dem Stückgut positioniert werden. Hierfür ist eine Steuerung mit der zugehörigen Sensorik und Aktorik vorzusehen. Anschließend muss durch Absenken des Lastaufnahmemittels der Kontakt zwischen dem unteren Ende des Schlauches und des Stückgutes hergestellt werden. Die Steuerung des Absenkvorganges kann dabei mit Hilfe des Druckes im Inneren des Schlauches vorgenommen werden, der sich mit geringem technischen Aufwand messen lässt. Gemessen wird im Ergebnis ein Kontaktdruck bei Berührung zwischen Schlauch und Stückgut. Alternativ kann z.B. auch der Abstand zwischen einem Referenzpunkt des Lastaufnahmemittels und dem Boden, auf dem das Stückgut liegt, gemessen und eingestellt werden, oder der Abstand zum Stückgut selber.

### Funktion des Lastaufnahmemittels

Zum Aufnehmen eines Stückgutes wird das Lastaufnahmemittel so über das aufzunehmende Stückgut positioniert, dass die Unterkante des doppelwandigen Schlauches im ausgestülpten Zustand mit dem Gegenstand Kontakt bekommt Die optimale Kontaktkraft kann dabei zum Beispiel mit Hilfe des Innendruckes im Schlauch eingestellt werden. Dann wird das Innenteil 3 nach oben bewegt. Hierdurch wird eine Bewegung der Schlauchoberfläche erzeugt die den Gegenstand in den freien Teil der Schlauchmitte hineinzieht. Damit hierbei der Kontakt zwischen dem Gegenstand und der Schlauchunterseite nicht verloren geht, kann das Außenteil gleichzeitig geringfügig nach unten bewegt werden.

Da der Schlauch aus einem elastischen Material besteht und mit einem fließfähigen (viskosen) Material gefüllt ist, passt er sich flexibel an die unterschiedlichsten Oberflächenkonturen von Gegenständen an.

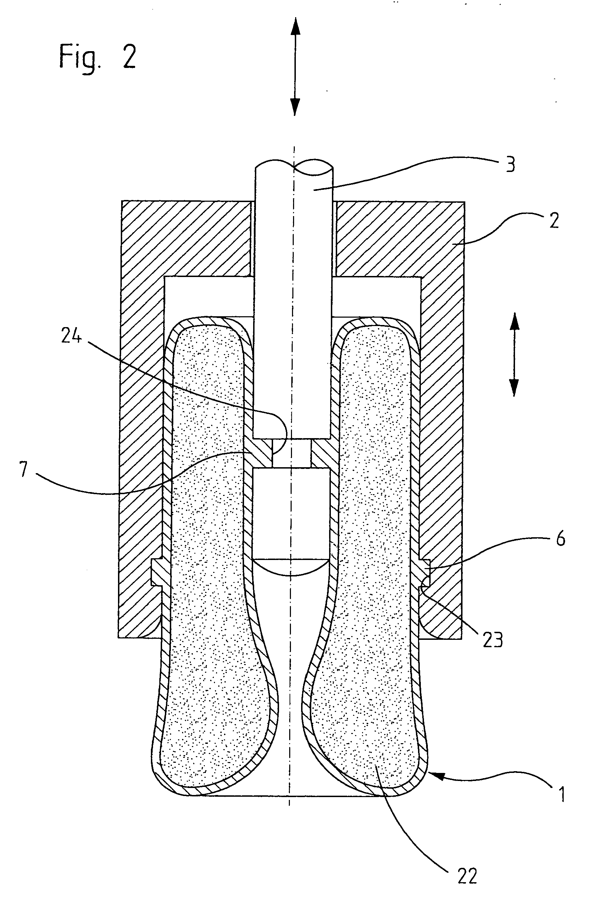

Bei den in den Figuren 2 bis 6 gezeigten Ausführungsbeispielen werden nachfolgend lediglich die Änderungen gegenüber dem in Figur 1 gezeigten Ausführung beschrieben.

Der Schlauch 1 der Figur 2 ist auswechselbar ausgebildet. Er ist dazu auf seiner Außenseite mit einer Wulst 6 versehen, der in eine ringförmige Innennut 23 des Außenteiles 2 hineinragt. Auf diese Weise wird die Außenseite des Schlauches 1 formschlüssig in axialer Richtung im Außenteil 2 fixiert. Bei der Montage wird der Schlauch 1 einfach solange in das Außenteil 2 geschoben, bis der Wulst 6 in die Ringnut 23 einrastet. Bei der Demontage muss der Wulst 6 zunächst aus der Ringnut 23 mit einem geeigneten Werkzeug herausgedrückt werden, oder eine ausreichende Kraft aufgebracht werden. Danach kann der Schlauch 1 in axialer Richtung herausgezogen werden. In analoger Weise lässt sich die Innenseite des doppelwandigen Schlauches 1 am Innenteil 3 befestigen, die im gezeigten Beispiel als Stange ausgebildet ist, die eine ringförmige Außennut 24 aufweist, in die ein Wulst 7 hineinragt.

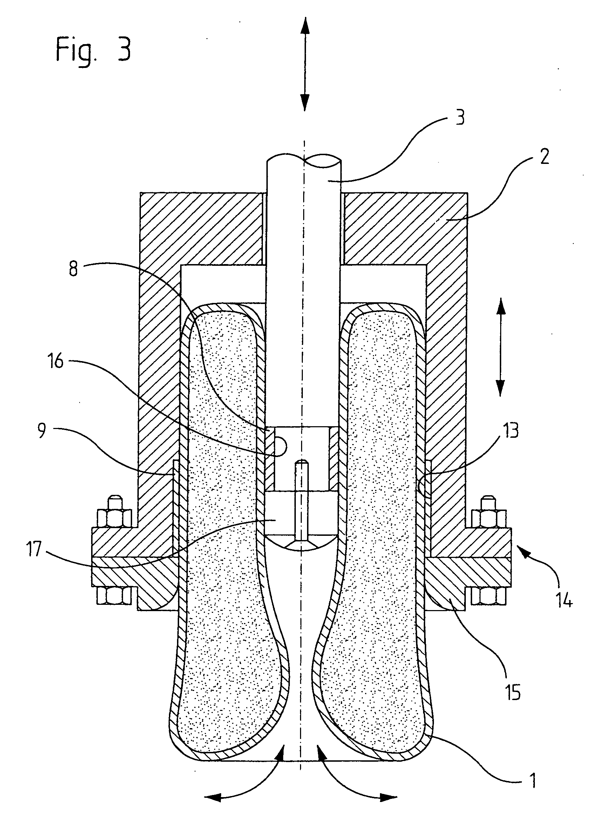

Auch der Schlauch 1 der Figur 3 ist auswechselbar ausgebildet. Die Außenseite des Schlauches 1 ist dazu in dem Bereich, in dem Schlauch 1 und Außenteil 2 miteinander verbunden sein sollen, von einer Hülse 9 umschlossen. Die Hülse 9 besitzt die gleiche Querschnittsform wie eine korrespondierende Aufnahme 13 im Innenumfang des Außenteiles 2. Die Hülse 9 ist mit dem Schlauch 1 zum Beispiel durch verkleben fest verbunden, und sie ist durch eine lösbare Verbindung z.B. Schraubverbindung, im Außenteil fixiert, so dass die Montage und Demontage des Schlauches in einfacher Weise möglich ist. Im gezeigten Beispiel muß dazu ein Abschlußstück 15 gelöst werden.

In analoger Weise ist die Innenseite des doppelwandigen Schlauches 1 am Innenteil 3 befestigt. Der Schlauch 1 ist dazu auf seiner Innenseite mit einer weiteren Hülse 8 ausgestattet, die in einer korrespondierenden Aufnahme 16 des Innenteiles 3 aufgenommen und durch ein Abschlußstück 17 gesichert ist. Die Hülsen 8 und 9 selbst lassen sich kostengünstig herstellen und können somit beim Auswechseln des Schlauches mit ausgewechselt werden. Aufgrund der lösbaren Verbindung können selbstverständlich auch das Innen- und das Außenteil einzeln ausgetauscht werden.

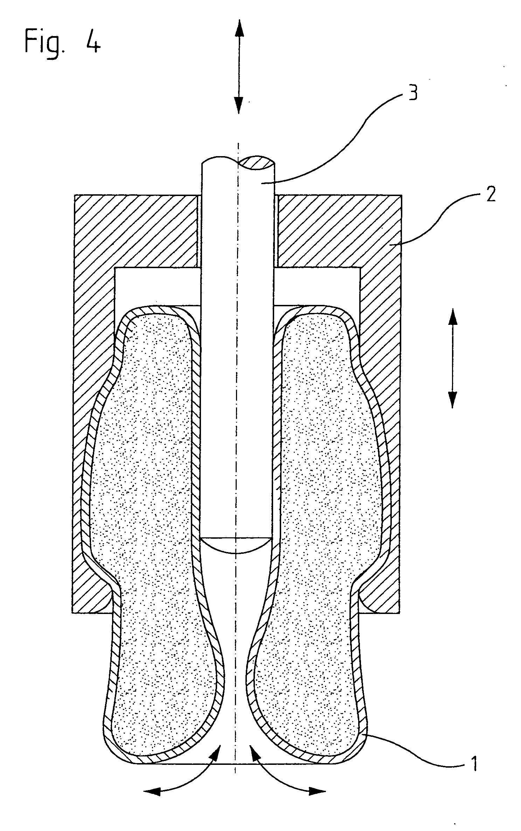

Die Figuren 4, 5 und 6 zeigen konstruktive Maßnahmen zur Verbesserung der Greif- und Haltefunktion, um spezielle Gegenstände (Stückgüter) besser greifen und während des Transportvorgangs sicherer halten zu können.

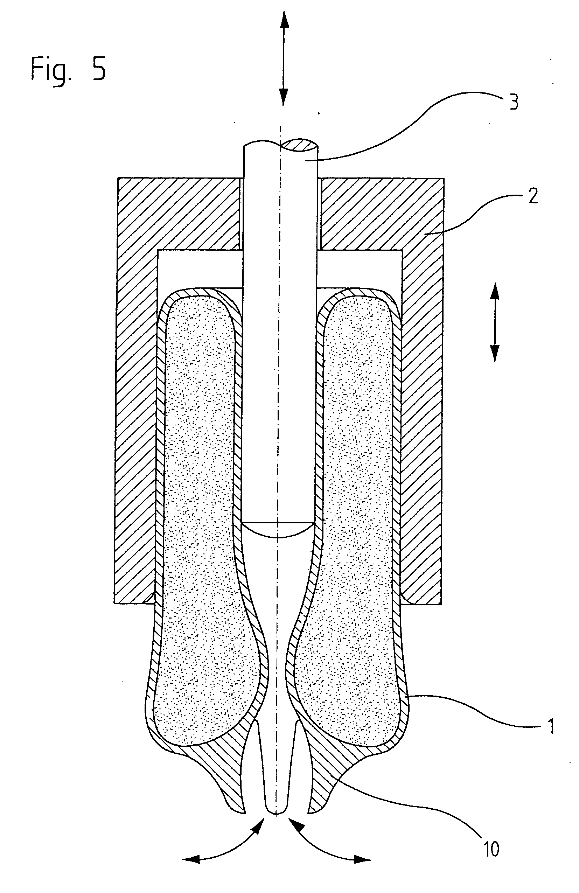

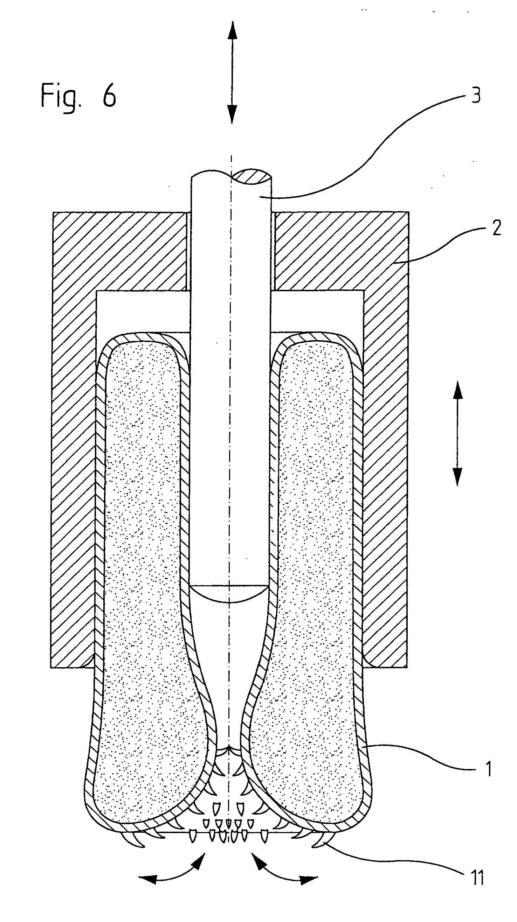

Gemäß der Konstruktion der Figur 4 weitet sich die Innenseite des Außenteiles 2 nach unten hin radial zunächst auf, um sich dann wieder zu verengen. Hierdurch sollen insbesondere spezielle Gegenstände während des Transportvorgangs sicherer gehalten werden. Gemäß dem Ausführungsbeispiel der Figur 5 ist der doppelwandige Schlauch 1 in seinem Bereich mit mehreren Greiffingern 10 aus einem festen oder elastischen Material versehen. Schließlich ist der doppelwandige Schlauch gemäß Figur 6 in seinem unteren Bereich mit einer Vielzahl von Noppen oder Borsten 11 ausgestattet.

Als weitere nicht dargestellte konstruktive Maßnahme kann die Dicke der Schlauchwand im unteren Bereich, d.h. dort wo der Schlauch beim Greifen mit dem Gegenstand in Kontakt kommt, geringer bemessen sein, als im übrigen Bereich. Der Schlauch ist dann in diesem dünnwandigen Bereich flexibler, um sich bessser der Kontur des Stückgutes anzupassen. Diese gezeigten Varianten könnten auch kombiniert verwirklicht werden.

Um einen Gegenstand sicher greifen zu können, wird das erfindungsgemäße Lastaufnahmemittel zunächst in der horizontalen Ebene über dem zu greifenden Gegenstand (Stückgut) positioniert. Hierzu ist z.B. eine geeignete Steuerung der Maschine (z.B. eines Roboters) erforderlich., von der das Lastaufnahmemittel im Raum bewegt wird. Diese Steuerung kann auf sehr unterschiedliche Weise technisch realisiert werden und ist nicht Gegenstand der Erfindung. Die vertikale Positionierung des Lastaufnahmemittels über den zu greifenden Gegenstand muss einerseits so sein, dass der untere Bereich des doppelwandigen Schlauches Kontakt zum Gegenstand bekommt, und andererseits darf die mechanische Beanspruchung des Schlauches sowie des Gegenstandes durch die Anpressung nicht zu hoch werden. Neben einer Messung des Abstandes zwischen einem Referenzpunkt des Lastaufnahmemittels und einem Referenzpunkt des zu greifenden Gegenstandes beziehungsweise der Unterlage, auf der der Gegenstand liegt, wird vorgeschlagen, die Kraft auf das Lastaufnahmemittel zu messen, Hierzu kann z.B. eine Kraftmessvorrichtung (nicht dargestellt) zwischen dem Außenteil und der daran befestigten Maschine (Roboterarm) vorgesehen werden. Alternativ kann auch der Innendruck in der gefüllten Kammer des doppelwandigen Schlauches gemessen werden.

## Patentansprüche

1. Vorrichtung zum Aufnehmen einzelner Stückgüter, bestehend aus einem Außenteil (2), einem daran befestigten Schlauch (1) und einem an dem Schlauch (1) befestigten Innenteil (3), das relativ zum Außenteil (2) beweglich ist, wobei der Schlauch (1) doppelwandig ausgebildet ist und **dadurch** eine ringförmige Kammer (20) umgibt, die mit einem fließfähigen Material (22) gefüllt ist, und wobei der Schlauch (1) beim Absenken der Vorrichtung das Stückgut zumindest teilweise umschließend ausgebildet ist, und wobei Außenteil (2) und Innenteil (3) derart am Schlauch (1) befestigt sind, daß eine Bewegung des Innenteils (3) relativ zum Außenteil (2) zu einer Einwärtsbewegung des am Stückgut anliegenden Endes des Schlauches führt.

2. Vorrichtung nach Anspruch 1, **dadurch gekennzeichnet, daß** das Innenteil (3) axial beweglich im Außenteil (2) gelagert ist.

3. Vorrichtung nach Anspruch 1 oder 2, **dadurch gekennzeichnet, daß** sie einen Antrieb für die Relativbewegung zwischen Außen- (2) und Innenteil (3) aufweist.

4. Vorrichtung nach Anspruch 3, **dadurch gekennzeichnet, daß** der Antrieb weg- oder kraftgeregelt ist.

5. Vorrichtung nach einem der vorhergehenden Ansprüche, **dadurch gekennzeichnet, daß** die Kammer (20) mit einer Einrichtung (4, 5) zur Zufuhr oder Entnahme des fließfähigen Materials (22) in bzw. aus der Kammer (20) Verbindung steht.

6. Vorrichtung nach einem der vorhergehenden Ansprüche, **dadurch gekennzeichnet, daß** der Schlauch (1) aus einem elastischen Material besteht.

7. Vorrichtung nach einem der vorhergehenden Ansprüche, **dadurch gekennzeichnet, daß** der Schlauch (1) mehrschichtig aufgebaut ist, insbesondere aus einer abdichtenden Schicht, aus einer Festigkeit gebenden Schicht und einer mit dem Stückgut in Kontakt kommenden Außenschicht aus einem Material mit großem Reibbeiwert.

8. Vorrichtung nach einem der vorhergehenden Ansprüche, **dadurch gekennzeichnet, daß** der Schlauch (1) in dem mit dem Stückgut in Kontakt kommenden Bereich mit die Haftung verbessernden Mitteln (10, 11) versehen ist.

9. Vorrichtung nach einem der vorhergehenden Ansprüche, **dadurch gekennzeichnet, daß** der Schlauch (1) lösbar am Außenteil (2) und/oder lösbar mit dem Innenteil (3) verbunden ist.

10. Vorrichtung nach einem der vorhergehenden Ansprüche, **dadurch gekennzeichnet, daß** sie Messmittel zum Messen des Schlauchinnendruckes aufweist.

11. Vorrichtung nach einem der vorhergehenden Ansprüche, **dadurch gekennzeichnet, daß** sie Abstandsmessmittel aufweist.

12. Vorrichtung nach einem der vorhergehenden Ansprüche, **dadurch gekennzeichnet, daß** der Schlauch (1) in seinem mit dem Stückgut in Kontakt kommenden Bereich dünnwandiger ausgebildet ist als im übrigen Bereich.
